# EUROPEAN PATENT APPLICATION

(11) **EP 3 130 906 A1**
(43) Date of publication of application: **15.02.2017**
(21) Application number: 15180714.6
(22) Date of filing: 12.08.2015
(51) Int. Cl.: G01N 1/12

(54) **SLAG CAP**

(71) Applicant: Heraeus Electro-Nite International N.V., 3530 Houthalen (BE)
(72) Inventor: Knevels, Johan, 3960 BREE (BE)
(74) Representative: Heraeus IP

(57) **Abstract**

Sampling device for molten metals comprising a carrier tube having an immersion end, and a sample chamber arranged in the carrier tube (4) and having an inflow conduit (3) with an inflow opening inside the sampling chamber and with an outer open end of the inflow conduit whereby the outer open end of the inflow conduit is surrounded by a protective cap (6), whereby the protective cap having a metallic body with an inner side, directed towards the inflow conduit and an outer side. It is characterized in that at the outer side a layer (5) of a material is arranged, whereby the material comprises a compound which decomposes and forms water vapor if immersed in molten steel or molten iron or molten slag in order to improve the known samplers and to allow a more accurate measurement of elements having low concentrations. It further refers to a cap and its use.

## Description

The invention refers to a sampling device for molten metals comprising a carrier tube having an immersion end, and a sample chamber arranged in the carrier tube and having an inflow conduit with an inflow opening inside the sampling chamber and with an outer open end of the inflow conduit whereby the outer open end of the inflow conduit is surrounded by a protective cap, whereby the protective cap having a metallic body with an inner side, directed towards the inflow conduit and an outer side. It further refers to a cap and its use.

Sampling devices or probes for extracting a sample of molten steel from a steel bath are well known in the art and provide a coupon or disc of solid metal for use in spectrographic analysis. These devices are generally constructed containing small molds or a mold cavity to be filled with liquid steel as the sampler is dipped into the metal bath. The term liquid or molten steel or steel bath is to be understood in a rather wide sense; it is to include, e.g., cast iron melts, steel alloys as well as non-ferrous metal melts.

Sampling devices of the type referred to above generally, and of known construction, include a cardboard carrier tube supporting a housing which contains a multi-part mold. Communicating between the liquid metal and the molten bath is an inflow conduit normally of quartz glass and may contain deoxidants.

During the processing of motel metals, the liquid metal to be sampled usually has a cover of slag or dross which may be entirely liquid, solid or a combination thereof. US 3,686,949 teaches that the immersion end of the sampling device, especially the inflow conduit should be protected from the slag layer atop the metal bath during immersion by a protective cap. This cap prevents slag from entering the sampling chamber. The protective cap melts after immersing below the slag layer and thus the inflow is exposed only to the desired melt. Also, certain slags may freeze on the protective cap delaying the opening and/or dragging the undesirable slag into the metal sampling vicinity. To counteract the effect of slag freezing an additional cover formed of laminated assemblies of paper or plastic which vaporize with enough turbulence to avoid such undesired slag deposits on the cap.

US 4,046,016 teaches that the covering of paper or similar material serves two purposes. In burning off it volatilizes explosively, removing the encrusted slag and also by selecting materials of proper thickness, total burn-off time can be extended to provide control over sampling immersion depths.

Although the combination of a paper cover over a metal cap provides a solution for a majority of molten metal sampling conditions there are critical grades of metals that during processing require exceptional purity in sampling due to the ultralow concentration of elements dissolved in the sampled metal.

US 4,941,364 recognizes that prior art samplers for steel have been designed with protective capping and entrance system that melted along with, and were entrained into the molten material being sampled. During the sampling of extremely low concentrations, typically 10-50 ppm of certain elements such as C, S, N, the prior art protective covers resulted in either the addition of undesirable contaminants to flow into the actual sample chamber or allowed elements contained in the capping system to cause a diluting effect on similar elements contained in the molten batch material. To avoid contamination, a non-reactive alumina-silicate ceramic held together by a retaining device adapted to fail upon contact with the molten metal, thus releasing the portions of the protective cover so that they will separate and float upwards. This complicated and high cost structure was only applicable to a narrow range of high temperature sampling conditions.

When the liquid metal to be sampled is very close to the temperature of its solidification, such as in the tundish for continuous casting of ultralow carbon steel, this combination imposes unique problems. During immersion in metals near their freezing point typically the slag covering is also thick and viscous and easily solidified onto the cold immersion sampler. The sampler inflow must be protected from the effects of floating slag which must not be allowed to freeze on the cold sampler and block the sampling operation. At the same time, any metal cover protecting the inflow conduit of the sampler must not be so thick as to retard the melting and thus unnecessarily delaying or preventing the entrance of the molten metal to be sampled.

It is known for aluminium killed ultralow carbon steel, especially bake hardened automotive grades where the carbon in solution in the ferrite phase is responsible for their good formability and high strength after paint baking that a narrow range of carbon content is required. US 5,014,561 teaches away from the use of metal caps inflow coverings and to use low melting temperature glasses such as Pyrex in the near liquidus sampling conditions thus avoiding any carbon contamination. US 5,448,923 proposes thin metal slag covers of comparable very low carbon steel with a composition of the sampled steel and thus avoid introducing undesired carbon to the sample. These caps are slit to promote melting. Despite recognition of the difficulty in ultralow element sampling in near liquidus conditions, the prior art has failed to recognize and provide a solution that eliminates the contamination arising from the paper and/or plastic covering that prevent freezing of the slag.

It is an object of the present invention to improve the known samplers and to allow a more accurate measurement of elements having low concentrations.

The present invention relates to a sampling device for obtaining samples from liquid metals such as iron, steel or other metals and metal alloys provided with a protective cap coated with a decomposing layer resulting in a water vapor layer to avoid freezing of slag to the protective cap during immersion. A cap in the sense of the invention is a technical device, having an essentially convex shape with an opening, an outer side and an inner side limiting an inner hollow space. It can be used as closure of an opening.

The above object is solved by the invention described in the independent claims. Preferred embodiments are defined in the dependent claims.

The invention is directed to a sampling device for molten metals comprising a carrier tube having an immersion end, and a sample chamber arranged in the carrier tube and having an inflow conduit with an inflow opening inside the sampling chamber and with an outer open end of the inflow conduit whereby the outer open end of the inflow conduit is surrounded by a protective cap, whereby the protective cap having a metallic body with an inner side, directed towards the inflow conduit and an outer side. It is characterized in that at the outer side a layer of a material is arranged, whereby the material comprises a compound, which decomposes and forms water vapor if immersed in molten steel or molten iron or molten slag.

Preferably the compound of the layer comprises at least one metal hydroxide or at least one hydrated metal salt or a mixture of the at least one metal hydroxide and the at least one hydrated metal salt and a binder, preferably a water glass binder. Aluminium hydroxide as a relatively cheap and easily applicable material or magnesium hydroxide may be used as compound for the layer. Both materials are good usable to create the water vapor protection. It may also be possible to use calcium hydroxide or water glass as compound of the layer.

In a preferred embodiment the sampling device may be characterized in that the inflow conduit and the sampling chamber are at least partially arranged in a housing of a refractory material, whereby the housing is arranged at the immersion end of the carrier tube, in order to improve mechanical and thermo resistance of the device during immersion. The protective cap can be arranged at the housing to improve stability before immersion.

Further it can be of advantage, that a sensor, preferably a temperature sensor or an electrochemical sensor, is arranged at the immersion end of the carrier tube to take also measurements simultaneously.

The invention is further directed to a cap having a metallic body with an inner side and an outer side, whereby the cap is characterized in that at the outer side a layer of a material is arranged, whereby the material comprises a compound, which decomposes and forms water vapor if immersed in molten steel or molten iron or molten slag.

The invention is further directed to the material for use as a layer, preferably as a layer of a cap whereas the layer comprises a compound, which may comprise a binder, preferably a water glass binder; whereby the compound decomposes to forms water vapor if immersed in molten iron or molten steel or molten slag.

In a preferred embodiment the cap is characterized in that the compound of the layer comprises at least one metal hydroxide or at least one hydrated metal salt or a mixture of the at least one metal hydroxide and the at least one hydrated metal salt. Especially aluminium hydroxide as a relatively cheap and easily applicable material or magnesium hydroxide may be used as compound for the layer. Both materials are good usable to create the water vapor protection. It may also be possible to use calcium hydroxide or water glass as compound of the layer.

An aspect of the invention is the use of the cap as protective cap of a sampling device or a sensor device.

The inventive coating on the protective cap is not carbon containing and therefore cannot contribute to an error in carbon by addition. The water vapor releasing compound as well as the water releasing binder can be selected from those base elements that are either not analyzed in a typical spectrographic sample or belong to the group of analyzed elements, which are not critical for that analysis. Typical in aluminium killed ultralow carbon samples it is critical that the carbon content is detectable within a few ppm. It had been observed that the release of water vapor did not result in gas voids in the sample as one normally skilled in the art would expect.

The present invention applies to a coating of, but not limited to metallic hydroxides such as Al(OH)₃ or Mg(OH)₂. These compounds decompose at a relatively low temperature, 2 Al(OH)₃ → Al2O₃+3H₂O, absorbing a large amount of heat while producing a surface gas (water vapor) layer. The volume expansion of water vapor at the slag/coating surface results in a contiguous rejection layer during immersion preventing the sticking of slag to the base steel cap. One skilled in the art can recognize that other like compounds, such as but not limited other metal hydrides and hydrated salts that release water upon their decomposition are suitable. Such usable compounds could also be Ca(OH)₂ or hydrated compounds such as Na₂SO₄·10H₂O or MgCl₂·6H₂O.

The present invention applies to a coating comprising a binder such as sodium silicate or potassium silicate. This binder decomposes at a temperature below the iron or steelmaking temperature and releases water vapor adding in the generation or a surface gas layer on the protective cap. Additionally the synergistic setting property of sodium silicate and hydroxides of Al, Ca, Mg, or alternately one could use setting agents such as CaCl₂,NaH₂BO₃, H₂SO₄ improve the hardness of the coating. One skilled in the art can recognize that other like binders, but not limited to silicates, which decompose to water vapor are suitable.

The invention is described by way of example based on the following figures.

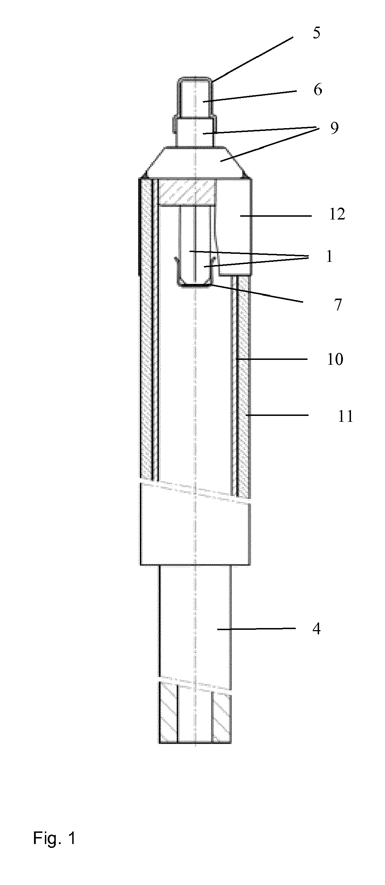

Figure 1 shows a schematically view of a sampler according to the invention,

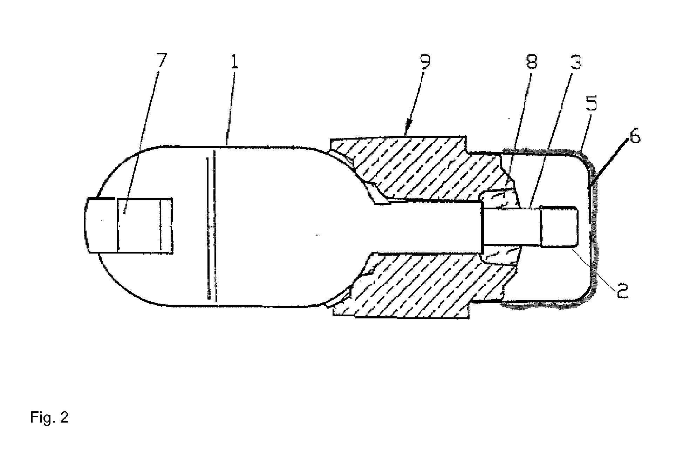

Figure 2 shows details of an inventive sampler.

A refractory housing 9, preferably of cordierite, of the sampler, is arranged at the immersion end of a cardboard carrier tube 4. At the outer surface of the immersion end of the cardboard tube 4 a cardboard sleeve 10 is arranged, which is covered by a usual non splash sleeve 11. The immersion end of the non splash sleeve 11 is surrounded by an adhesive tape 12. Two mold halves 1 of a sampling chamber and an inflow conduit 3 are mounted in the refractory housing 9. Attached to the immersion end of the refractory housing 9 is an outer protective cap 6, coated by a layer 5 of a water vapor forming compound.

Mating molds halves 1 of the sampling chamber to receive molten metal are held together by a clip 7. An elongated portion of the mold halves receive the inflow conduit 3 which is fixed by cement 8. Mold halves 1 and inflow conduit 3 are cemented into a refractory housing 9 which is held by the cardboard carrier tube 4, for immersion. The inflow conduit 3 is closed by an inner cap 2, preferably of ultralow carbon steel. Attached to the housing is the outer protective cap 6, having an inner side which is directed towards the housing and the inflow conduit 3 and an outer side, coated by a layer 5 of a water vapor forming compound, preferably aluminium hydroxide. The layer 5 has a thickness of 0,1 to 0,5 mm.

A first example of a suitable coating layer 5 may contain between 35 to 55 g aluminium hydroxide powder, preferably 45 g aluminium hydroxide powder; 20 to 40 µm, preferably 30 µm powder size and 50 to 100 g, preferably 70 g, water glass of approximately 38 Baumé (1,35 g/ml). The water glass has a weight ratio modulus SiO₂/Na₂O of about 3,65.

A second example of a suitable coating layer 5 may contain between 35 to 55 g aluminium hydroxide powder, preferably 45 g aluminium hydroxide powder; 30 to 50 g, preferably 40 g, silica sand having an average grain size of about 47 µm and a density of about 1,15 g/cm³; and 120 to 160 g, preferably 140 g, water glass of approximately 38 Baumé (1,35 g/ml). The water glass has a weight ratio modulus SiO₂/Na₂O of about 3,65.

A third example of a suitable coating layer 5 may contain between 40 to 60 g magnesium hydroxide powder, preferably 50 g magnesium hydroxide powder; 30 to 50 g, preferably 40 g, silica sand having an average grain size of about 47 µm and a density of about 1,15 g/cm³; and 120 to 160 g, preferably 140 g, water glass of approximately 38 Baumé (1,35 g/ml). The water glass has a weight ratio modulus SiO₂/Na₂O of about 3,65.

A fourth example of a suitable coating layer 5 may contain 100 g of a powder of between 40 to 60% by weight magnesium hexahydrate powder, MgCl₂·6H₂O, density of approximately 1,57 g/cm³, preferably 50% magnesium hexahydrate powder; 40 to 60%, preferably 50%, silica sand of a density of about 1,15 g/cm³; and a liquid binder of potassium silicate, 120 to 160 g, preferably 140 g with a weight ratio of K/Na2O of 2,5

One skilled in the art of coatings will understand that the wetting coefficient of silicate binders decreases as the viscosity increases. Control of the viscosity of the coating is a practical matter known in the art whereas aside from adding relatively small additions of water to the mixture, the viscosity can also be reduced by small additions of potassium hydroxide or by simply increasing the liquid temperature. As such that deviations from the prescribed ratio of solids to liquids or small additions to the base mixture to control the viscosity are tolerated without departure from the scope of the invention.

Preferably 2-3 g of coating can be applied by conventional dip coating processes and allowed to air dry until dry to the touch.

## Claims

1. A sampling device for molten metals comprising a carrier tube having an immersion end, and a sample chamber arranged in the carrier tube and having an inflow conduit with an inflow opening inside the sampling chamber and with an outer open end of the inflow conduit whereby the outer open end of the inflow conduit is surrounded by a protective cap, whereby the protective cap having a metallic body with an inner side, directed towards the inflow conduit and an outer side, **characterized in that** at the outer side a layer of a material is arranged, whereby the material comprises a compound which decomposes and forms water vapor if immersed in molten steel or molten iron or molten slag.

2. A sampling device according to claim 1, **characterized in that** the compound of the layer comprises at least one metal hydroxide or at least one hydrated metal salt or a mixture of the at least one metal hydroxide and the at least one hydrated metal salt.

3. A sampling device according to claim 1 or 2, **characterized in that** the compound comprises a binder, preferably a water glass binder.

4. A sampling device according to claim 1 or 2, **characterized in that** the compound is aluminium hydroxide or magnesium hydroxide.

5. A sampling device according to claim 1 or 2, **characterized in that** the compound is calcium hydroxide.

6. A sampling device according to any of claims 1 to 5, **characterized in that** the inflow conduit and the sampling chamber are at least partially arranged in a housing of a refractory material, whereby the housing is arranged at the immersion end of the carrier tube.

7. A sampling device according to claim 6, **characterized in that** the protective cap is arranged at the housing.

8. A sampling device according to any of claims 1 to 7, **characterized in that** a sensor, preferably a temperature sensor or an electrochemical sensor, is arranged at the immersion end of the carrier tube.

9. A cap having a metallic body with an inner side and an outer side, **characterized in that** at the outer side a layer of a material is arranged, whereby the material comprises a compound and/or a binder which decompose and forms water vapor if immersed in molten steel or molten iron or molten slag.

10. A cap according to claim 9, **characterized in that** the compound of the layer comprises at least one metal hydroxide or at least one hydrated metal salt or a mixture of the at least one metal hydroxide and the at least one hydrated metal salt.

11. A cap according to claim 9 or 10, **characterized in that** the compound is aluminium hydroxide or magnesium hydroxide.

12. A cap according to claim 9 or 10, **characterized in that** the compound is calcium hydroxide.

13. A cap according to claim 9 or 10, **characterized in that** the compound is water glass.

14. Use of a cap according to any of claims 9 to 13 as protective cap of a sampling device or a sensor device.

15. Material for use as a layer, preferably as a layer of a cap according to any of claims 9 to 13, **characterized in that** it comprises a compound, which decomposes to form water vapor if immersed in molten iron or molten steel or molten slag.

16. Material according to claim 15, **characterized in that** it comprises a binder, preferably a water glass binder.
